# EUROPEAN PATENT SPECIFICATION

(11) **EP 2 993 026 B1**
(45) Date of publication and mention of the grant of the patent: **30.07.2025**
(21) Application number: 15170725.4
(22) Date of filing: 04.06.2015
(51) Int. Cl.: B29C 48/02, B29C 48/28, B29C 48/92, B29D 30/00

(54) **THE DEVICE FOR CONTROLLING THE PARAMETERS OF COATING HEADS FOR BEAD WIRES**
VORRICHTUNG ZUR STEUERUNG DER PARAMETER VON BESCHICHTUNGSKÖPFEN FÜR WULSTDRÄHTE
DISPOSITIF DE CONTROLE DE PARAMETRES DE TETES DE REVETEMENT POUR DES TRINGLES

(30) Priority: 03.09.2014 SK 501072014 U
(43) Date of publication of application: 09.03.2016
(73) Proprietor: Fischer TireTech Slovakia, s. r. o., 911 01 Trencin (SK)
(72) Inventor: Sedivý, Vladimír, 913 32 Dolná Súca (SK); Kaprálik, Mário, 020 01 Púchov (SK); Kurinec, Pavol, 018 41 Dubnica nad Váhom (SK)
(74) Representative: Cechvalova, Dagmar

(56) References cited:
- WO-A1-2006/041101
- DE-A1- 2 457 249
- JP-A- H06 179 233
- US-A- 3 882 819
- US-A1- 2011 220 254
- US-B1- 6 634 878

## Description

### BACKGROUND OF THE INVENTION

### Field of the invention

The invention relates to the device for controlling the parameters of coating heads for bead wires. Coating extrusion heads are intended for continual production of one or more coated bead materials in the form of fibres, wires or ropes. In the area of heads cavity, extrusion coating heads comprise at least one guiding lip, channel insert of head and calibration lip which enable the movement of coated bead wire pulled by other device.

### Description of the related art

The usual production devices for the bead wires the coating comprise at least one extruder attached to the coating extrusion head. These devices process the input rubber mixture in purpose of its mixing and heating to generate pressure in by this way plasticized material which is consequently extruded to the cavity of coating head through which it is pulled the bead wire through guiding lip, channel insert of head and calibration lip.

Such modified bead materials in form of fibres, wires or ropes coated by rubber mixture are further processed in production of products such as for example tires.

D1-D6 The international application WO2006041101A1 discloses a a rubber coating head that covers a plurality of cords with rubber and extrudes them as a band-like body. The thickness of the band-like body is adjusted by changing the dimension of the opening in the thickness direction of the band according to the transfer speed of the cords.

The US patent document US3882819A discloses a device for applying a liquid coating composition to an element of continuous length. The device includes a body member with a die member, an adjustable pressure member, and a valve means within the body member to regulate the flow of the coating composition to the die member.

The US patent US6634878B discloses a crosshead having a ground color main extruder and multiple stripe sub extruders that supply colored resin in a stripe-like manner, with insert molds and switch cocks that allow alternating switching between the stripe sub extruders when changing the colored resin. This configuration prevents the formation of a mixed color area when changing from the old color to the next color, thereby eliminating color change loss or failure in the produced electric wire.

The US application US2011220254A1 discloses a method for sheathing a cord with a plastic or thermoplastic material using a cord sheathing device. The key feature is the use of a mobile die with a smaller calibration section than the outlet die, which can be moved between positions upstream and downstream of the central chamber to control the sheathing process at different cord speeds.

The Japanese patent application JPH06179233A discloses a wire rod coating method involves rotating the extruder screw at a steady-state speed to bring the resin pressure and temperature to a steady state before starting wire coating. The wire coating apparatus has a discharge hole and pressure adjusting valve to control the resin pressure in the crosshead to the steady-state pressure, allowing the system to quickly reach a steady operating state.

The German document DE2457249A1 discloses a device for plastic coating of stranded cables, where the plastic flow is divided into two concentric sheath flows - an outer flow that forms the outer coating, and an inner flow that forms a round core strand filled with the stranded cable. This allows for a completely smooth plastic coating that does not show an image of the underlying cable stranding structure.

The rubber mixtures coating is difficult technological process sensitive for keeping strict conditions concerning the pressure and temperature of the plasticized rubber mixture while bead wire coating. Disadvantage of such devices is problematic keeping of the required temperature and also the pressure of rubber mixture in area of coating head cavities what leads to unstable coating process and consequently to large amount of waste or poor quality of final product and additional costs rising.

The proposed device for controlling the parameters of coating heads for bead wire creates the conditions for stabile and controllable technological process characterized by high quality of final product while it is possible to change the other parameters such as operationally necessary changes of speed of input bead material and eliminates the short-comings of the related art.

### SUMMARY OF THE INVENTION

The invention uses idea of using the plastification of rubber mixture in extruder with control of revolutions to reach a required temperature of mixture, while the transfer actuating unit is attached to cavity of coating head to keep required pressure in cavity of coating head and consequently the constant feeding volume of extruded mixture from extruder is resiliently automatically divided to volume entrained by coated bead wire and volume leaking through transfer actuating unit outside coating head in the whole range of working modes.

The advantage of the invention is that it ensures keeping the required temperature and pressure of plasticized rubber mixture in cavity of coating head independently on the speed of coated bead wire pulled through coating head. This consequently improves of the quality and uniformity of bead wire coating and therefore the coating process quality increases the stability of the process from technological point of view.

The transfer pressure actuating unit attached to coating head according to this invention is controlled to constant pressure and can be controlled pneumatically or by the other way. The second required parameter - rubber mixture temperature, is controlled by the speed of extruder screw rotation, while the surplus volume of rubber mixture can be advantageously fed back to the extruder hopper for reprocessing.

It is advantageous to arrange the coating head as sectional and multiple with divided channel insert for simple feeding of bead wire and simple cleaning of coating head cavity. Shape of channel insert cavities is tapered in the direction of actuating unit and goes to radiuses. These radiuses consequently go to the plane which is perpendicular to the axle of pressure actuating unit hole.

The device providing coating the bead wires according to the invention comprises of solid flange attached to the end of extruder, removable flange with built rectifier of flowing mixture, divided channel insert, guiding and calibration lip divided to parts jointed by fastener, bayonet or other closure and pressure actuating unit.

The invention creates the coating system reaching higher operation reliability compared with mentioned usual devices of this type and despite of higher investment costs it brings reduction of cost per unit of the output.

### BRIEF DESCRIPTION OF THE DRAWINGS

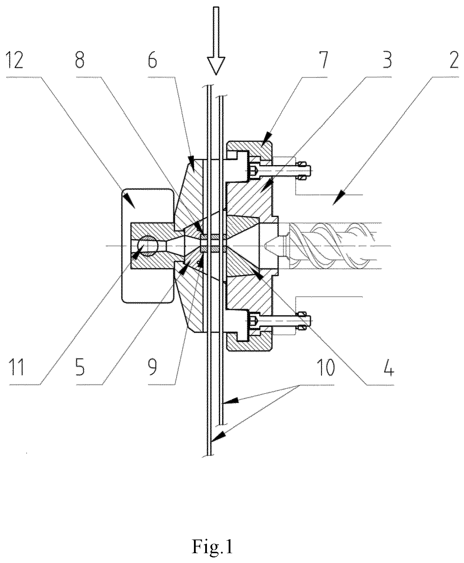

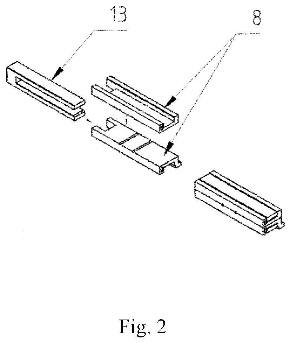

In the drawing in Fig. 1 is described the cut of coating head attached to extruder.
In the drawing in Fig.2 is described divided guiding lip.

### DETAILED DESCRIPTION OF THE INVENTION

Example of implementation the invention is described in Fig. 1 where flange **3** of the coating head **1** is joined with extruder flange **2,** while in flange **3** is placed flow rectifier **4** of not shown rubber mixture to the boxes of divided channel insert **5,** which is placed in removable flange **6** of coating head **1** attached to flange **3** by bayonet or other enclosure **7,** while in channel insert are placed guiding lip **8** and calibration lip **9** with the holes perpendicularly on the axle of extruder **2** screw for one or more bead materials **10,** where guiding lip **8** shown at Fig. 2 can advantageously be divided to two parts jointed by fastener **13,** while the transfer actuating unit **11** is controlled by pneumatic or other drive **12.**

The operation of higher described device is following: input bead material 10 is pulled by not shown pulling device in the direction perpendicular to extruder axle 2 through guiding lip 8 to channel insert 5, and consequently through calibration lip 9. On bead material **10** is in the area of channel insert **5** laid the rubber mixture being divided to boxes of channel insert **5,** by flow rectifier **4** at defined temperature which exact value is kept by particular revolutions of extruder **2** and on the defined pressure being kept by actuating unit **11,** preferably actuating transfer valve, though which surplus rubber mixture is leaving out of channel insert area.

Finally, it means that required temperature of rubber mixture is possible to keep by setting of revolutions of extruder screw while required value of pressure is possible to keep independently preferably by transfer actuating unit.

Other advantage is mechanical solution of channel insert which is divided to two parts jointed by easily detachable plug or by other joint what enables smooth feeding of bead materials to coating head and advantageously trouble-free cleaning of channel insert cavity from rubber mixture after the finishing of work on device.

Next advantage is the cavities shape of divided channel insert which are tapered in direction to opening of actuating valve and are going to radiuses which are going into plane which is perpendicular to axle of hole of actuating valve whereby it is ensured the correct flow of rubber mixture in channel insert needed for uniform laying of rubber mixture to all bead materials also in the case that number of bead materials is more than one.

### Industrial applicability

The way of creation the conditions for technological process of bead wire coating by rubber mixture in the coating heads representing end part of extruders is primarily usable in tire industry for continual production of coated bead materials in form of fibres, wires or ropes. Implementing of this process is independent of number of simultaneously coated wires. Secondly, this process is usable for coating of conductors in electrical and plastics industry.

### DETAILED DESCRIPTION OF THE INVENTION

Example of implementation the invention is described in fig.1 where flange **3** of the coating head **1** is joined with extruder flange **2,** while in flange **3** is placed flow rectifier **4** of not shown rubber mixture to the boxes of divided channel insert **5,** which is placed in removable flange **6** of coating head **1** attached to flange **3** by bayonet or other enclosure **7,** while in channel insert are placed guiding nozzle **8** and calibration nozzle **9** with the holes perpendicularly on the axle of extruder **2** screw for one or more bead materials **10,** where guiding nozzle **8** shown at fig. 2 can advantageously be divided to two parts jointed by fastener **13,** while the transfer actuating unit **11** is controlled by pneumatic or other drive **12.**

The operation of higher described device is following: input bead material **10** is pulled by not shown pulling device in the direction perpendicular to extruder axle **2** through guiding nozzle **8** to channel insert **5** and consequently through calibration nozzle **9.** On bead material **10** is in the area of channel insert **5** laid the rubber mixture being divided to boxes of channel insert **5** by flow rectifier **4** at defined temperature which exact value is kept by particular revolutions of extruder **2** and on the defined pressure being kept by actuating unit **11,** preferably actuating transfer valve, though which surplus rubber mixture is leaving out of channel insert area.

Finally it means that required temperature of rubber mixture is possible to keep by setting of revolutions of extruder screw while required value of pressure is possible to keep independently preferably by transfer actuating unit.

Other advantage is mechanical solution of channel insert which is divided to two parts jointed by easily detachable plug or by other joint what enables smooth feeding of bead materials to coating head and advantageously trouble-free cleaning of channel insert cavity from rubber mixture after the finishing of work on device.

Next advantage is the cavities shape of divided channel insert which are tapered in direction to opening of actuating valve and are going to radiuses which are going into plane which is perpendicular to axle of hole of actuating valve whereby it is ensured the correct flow of rubber mixture in channel insert needed for uniform laying of rubber mixture to all bead materials also in the case that number of bead materials is more than one.

### Industrial applicability

The way of creation the conditions for technological process of bead wire coating by rubber mixture in the coating heads representing end part of extruders is primarily usable in tire industry for continual production of coated bead materials in form of fibres, wires or ropes. Implementing of this process is independent of number of simultaneously coated wires. Secondly, this process is usable for coating of conductors in electrical and plastics industry.

## Claims

1. A device for controlling parameters of coating heads for bead wires comprising an extruder (2) with a screw, a coating head (1), a flange (3) of the coating head, an enclosure (7), a flow rectifier (4), a channel insert (5), a guiding lip (8), a calibration lip (9), and an independently controlled transfer actuating valve (11) jointed with a cavity of the coating head, which is preferably pneumatically, electrically or other way remotely controlled, wherein the said independently controlled transfer actuating valve (11) comprises a rubber mixture discharge outlet, and wherein the axis of the extruder (2) screw is perpendicular to the direction of the bead wire travel, **characterized in that** the guiding lip (8) and the calibration lip (9) are divided to parts jointed by a fastener (13), and **in that** the cavity of the coating head (1) is positioned in the rubber mixture travel path between the extruder (2) and the independently controlled transfer actuating valve (11).

2. The device for controlling the parameters of coating heads for bead wires according to claim 1, **characterized in that** the channel insert (5) is divided into parts.

## Patentansprüche

1. Eine Anlage zur Parametersteuerung der Beschichtungsköpfe für Lamellendrähte, die einen Extruder (2) mit einer Schraube beinhalten, einen Beschichtungskopf (1), einen Flansch (3) des Beschichtungskopfes, einen Verschluss (7), einen Durchflussgleichrichter (4), einen Kanaleinsatz (5), einen Führungsrand (8), eine Kalibrierkante (9) und ein mit dem Hohlraum des Beschichtungskopfs verbundenes unabhängig gesteuertes Überströmregelventil (11), das vorteilhaft pneumatisch, elektrisch oder auf eine andere Weise ferngesteuert ist, wobei das genannte unabhängig gesteuerte Überströmregelventil (11) eine Ablauföffnung für die Kautschukmischung aufweist, und wo die Achse der Extruderschraube (2) senkrecht zur Bewegungsrichtung des Lamellendrahts ist, **dadurch gekennzeichnet, dass** der Führungsrand (8) und die Kalibrierkante (9) in die mit dem Kupplungselement (13) verbundenen Teile unterteilt sind, als auch **dadurch, dass** der Hohlraum des Beschichtungskopfs (1) in der Bewegungsbahn der Kautschukmischung zwischen dem Extruder (2) und dem unabhängig gesteuerten Überströmregelventil (11) angebracht ist.

2. Eine Anlage zur Parametersteuerung der Beschichtungsköpfe für Lamellendrähte nach Anspruch 1, **dadurch gekennzeichnet, dass** der Kanaleinsatz (5) in Teile unterteilt ist.

## Revendications

1. Le dispositif de commande des paramètres des têtes d'enrobage pour des fils à lamelles, comprenant un extrudeur (2) muni d'une vis, une tête d'enrobage (1), une bride (3) de tête d'enrobage, une fermeture (7), un dispositif de guidage de l'écoulement (4), un insert de canalisation (5), un bord de guidage (8), un bord de calibrage (9), et une vanne de régulation de décharge (11) commandée indépendamment, reliée à la cavité de la tête d'enrobage, ladite vanne de régulation de décharge (11) étant de préférence commandée à distance de manière pneumatique, électrique ou autre, ladite vanne de régulation de décharge (11) comportant un orifice d'évacuation pour le mélange de caoutchouc, et l'axe de la vis de l'extrudeur (2) étant perpendiculaire à la direction de déplacement du fil à lamelles, **caractérisé en ce que** le bord de guidage (8) et le bord de calibrage (9) sont divisés en sections reliées par un élément de liaison (13), et **en ce que** la cavité de la tête d'enrobage (1) est disposée dans le trajet d'écoulement du mélange de caoutchouc entre l'extrudeur (2) et la vanne de régulation de décharge (11) commandée indépendamment.

2. Dispositif selon la revendication 1, **caractérisé en ce que** l'insert de canalisation (5) est divisé en sections.
